# EUROPEAN PATENT APPLICATION

(11) **EP 4 546 264 A1**
(43) Date of publication of application: **30.04.2025**
(21) Application number: 24208275.8
(22) Date of filing: 23.10.2024
(51) Int. Cl.: G06T 7/246

(54) **SYSTEMS AND METHODS FOR FAST MOTION ESTIMATION OF OBJECTS IN THREE-DIMENSIONAL ENVIRONMENTS**

(30) Priority: 27.10.2023 US 202318496719
(71) Applicant: Datalogic IP Tech S.r.l., 40012 Calderara di Reno (BO) (IT)
(72) Inventor: D'ERCOLI, Francesco, 40131 Bologna (BO) (IT); POLI, Flavio, 40138 Bologna (BO) (IT); GAVAGNA, Fabio, 44012 Bondeno (FE) (IT)
(74) Representative: Riccardi, Elisa

(57) **Abstract**

The disclosure relates generally to systems and methods for quickly and efficiently estimating motion of objects in a three-dimensional environment. The disclosed systems and methods include generating a voxelized map of the three-dimensional environment including voxelized objects of interest. Each voxel in the voxelized object is associated with a signature identifier that may be used to track motion of the voxelized objects at different timepoints. By creating data structures of the three-dimensional environment at different timepoints and comparing changes in the coordinate position of the voxelized objects, motion data of the voxelized objects in the three-dimensional environment may be estimated.

## Description

### Background

The present disclosure relates generally to systems and methods for quickly and efficiently estimating motion (e.g., velocity) of objects in a three-dimensional environment without the need for overly complex calculations. Such systems and methods may be useful in various settings, such as in a shared workspace environment to ensure the safety of a human working closely with automated machinery and other items in motion, or for stability and obstacle avoiding in autonomous guided vehicles and unmanned aerial vehicles, or for trajectory and task planning in robotic applications, or in other vision-guided systems that may involve relative motion between objects in an environment. In addition, the disclosed systems and methods may be used for various purposes in the above-referenced settings, such as for object tracking and identification in any setting, or for ensuring proper safety and distancing protocols are maintained in a shared workspace environment, and/or for managing alarm signals to help avoid potential danger in a shared workspace environment, for autonomous guided vehicles, and/or for suitable robotic applications.

**As** industrial and consumer applications continue implementing advanced computer vision techniques and systems to enhance existing technology, there is a growing need for efficiently handling motion detection and estimation of objects in complex, three-dimensional environments. In both two-dimensional and three-dimensional environments, the process of motion detection and estimation essentially relies on finding and comparing corresponding data points between two images of a scene taken at various timepoints. However, many currently available processes for motion detection and estimation typically involve time-intensive computations and analyses for determining such motion data. In some examples, to find motion vectors for target objects, both direct pixel-based methods (e.g., optical flow, recovering image motion at each pixel from spatial-temporal image brightness variation) and indirect feature-based methods (e.g., Corner detection, analyzing textured areas with subsequent RANSAC application for outliner filtering) may be adopted.

In some three-dimensional environments, optical flow techniques may provide a good approximation for tracking volume voxel movement between adjacent volumes from which motion data of objects in a three-dimensional scene may be derived. However, conventional optical flow techniques often require time-intensive calculations, such as for computing the spatial-temporal intensity derivates (a velocity measurement normal to the local intensity structures) and for integrating normal velocities to determine full velocities (locally via a least squares calculation or globally via a regularization) of the tracked objects. In some cases, using sparse optical flow approaches to focus on analyzing specific image features (e.g., edges and corners) instead of dense optical flow approaches that evaluate all pixels in a scene may help mitigate the computational load. However, such approaches typically result in a substantial loss of overall accuracy of the derived motion data, thereby diminishing the usefulness of the approach in various applications where more precise determinations are necessary.

Accordingly, the inventors have identified a need for systems and methods capable of efficiently estimating motion of objects in a three-dimensional space while minimizing computational load and maintaining accuracy to provide useful motion data. Additional aspects and advantages of such methods will be apparent from the following detailed description of example embodiments, which proceed with reference to the accompanying drawings.

Understanding that the drawings depict only certain embodiments and are not, therefore, to be considered limiting in nature, these embodiments will be described and explained with additional specificity and detail with reference to the drawings.

### Brief Description of the Drawings

FIG. 1 is a schematic illustration of a monitored three-dimensional environment in accordance with one embodiment.
FIG. 2 is a block diagram illustrating an example control system that may be used with a monitoring system to control objects in the three-dimensional environment in accordance with one embodiment.
FIG. 3 is a block diagram illustrating an example monitoring system in accordance with one embodiment.
FIG. 4 is a flow chart illustrating an example process for deriving motion information for three-dimensional objects in an environment in accordance with one embodiment.
FIG. 5 illustrates an example voxelized map of a three-dimensional environment in accordance with one embodiment.
FIG. 6 illustrates an example voxelized object and process for assigning unique six-dimensional signatures for each voxel of the voxelized object in accordance with one embodiment.
FIG. 7 illustrates an example embodiment using octree encoding processes to encode the voxelized object for further analysis in accordance with one embodiment.
FIG. 8 illustrates an example embodiment using the six-dimensional signature of FIG. 6 to identify corresponding data points between encoded octrees in accordance with one embodiment.
FIG. 9 illustrates an example motion computation derived from a comparison of the encoded octrees of FIG. 8 in accordance with one embodiment.

### Detailed Description of Example Embodiments

With reference to the drawings, this section describes example embodiments and their detailed construction and operation. The embodiments described herein are set forth by way of illustration only and not limitation. The described features, structures, characteristics, and methods of operation may be combined in any suitable manner in one or more embodiments. In view of the disclosure herein, those skilled in the art will recognize that the various embodiments can be practiced without one or more of the specific details or with other methods, components, materials, or the like. In other instances, well-known structures, materials, or methods of operation are not shown or not described in detail to avoid obscuring more pertinent aspects of the embodiments.

In the following description of the figures and any example embodiments, certain embodiments may describe the disclosed subject matter in the context of a three-dimensional workspace that may be shared between a human and an automated or semi-automated machine (e.g., a robot) or other suitable technology, where motion data obtained for any target objects in the three-dimensional workspace is obtained and analyzed. The motion data may be used for any of various suitable purposes, such as to identify and track objects in the scene, or to manage alarm protocols designed to protect personnel and reduce the likelihood of inadvertent injuries that may be caused by a machine or other objects in motion, or to control movement or operation of a machine in the scene. It should be understood that these references are merely example uses for the described systems and methods and should not be considered as limiting. The subject matter described herein, particularly the processes related to determining motion data from a three-dimensional scene, may apply in other environments and/or fields of use outside a workspace context. For example, other applicable fields of use for the disclosed processes may include autonomous guided vehicles, unmanned aerial vehicles, self-driving vehicles, robotics, and other suitable systems that may rely on vision guidance for object tracking and/or measurement of relative motion between objects in a three-dimensional environment.

In the general field of robotics, standards ISO 10218 and ISO/TS 15066 set forth by the International Electrotechnical Commission (IEC) provide speed and separation monitoring guidelines for ensuring a safe workspace between industrial machinery (e.g., a robot) and a human worker. Risk of injury to the human worker may be reduced in these environments by monitoring the motion of all objects within the workspace to ensure a protective separation distance between the human and machine is maintained to avoid collisions and to guarantee a safe movement speed for the machine at all times while the human and machine move along the workspace. By monitoring motion of all objects within the workspace, safety parameters may be developed and maintained to avoid injury to the human and/or collisions with the machine. Again, as noted above, the above scenario is one example within which the disclosed subject matter may be applied. The disclosed subject matter may be integrated with other systems or technologies in other examples.

As is further described in detail below with collective reference to the figures, the following disclosure relates generally to systems and methods for obtaining data from a three-dimensional environment and analyzing the data in an efficient manner to maintain an overall low computation load for estimating motion (e.g., raw speed components in the x-, y-, and z-axis) of objects over time in the environment. In some embodiments, the motion for the object may be estimated by focusing on the center of gravity for each object in the scene to further streamline the calculation and minimize computational load. However, if desired, other systems and methods may focus on the local motion of specific segments of the object (e.g., focusing on a moving joint of a robot or other machine). In other examples, a more robust calculation may be used that considers all aspects, or otherwise large portions, of the objects in the scene. In either of these cases, the processes described in detail below remain the same in character but are expanded to analyze additional data points as desired.

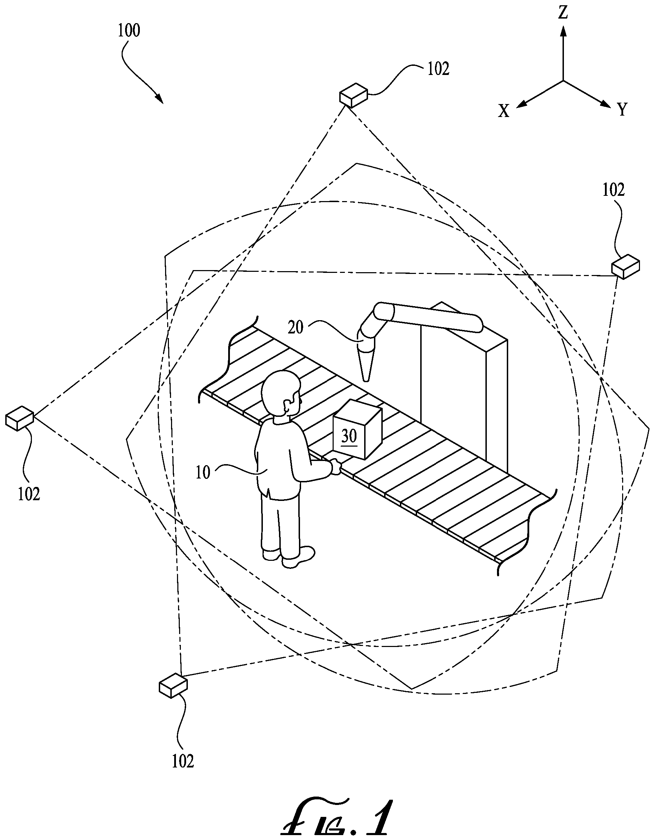

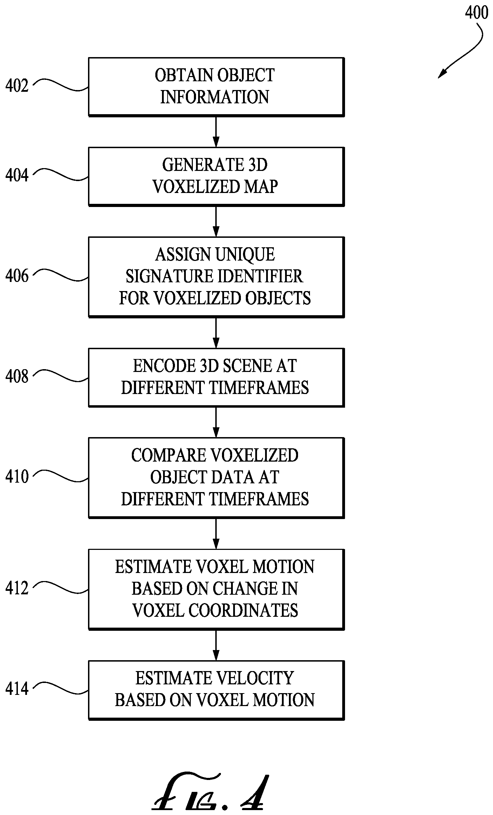

With reference to FIGS. 1-3, the following discussion provides a general overview of an example system and method relating to a vision system for monitoring a workspace between a human and a robot, followed by a detailed discussion with collective reference to FIGS. 4-9 of example systems and methods for efficiently analyzing data obtained by the vision system for tracking and measuring motion of objects (e.g., humans, robots, packages, items, etc.) in the workspace (or other three-dimensional environment).

**Turning** now to the figures, FIG. 1 schematically illustrates an example workspace 100 that may include one or more humans 10, one or more robots 20 (or another suitable machine, including automated or semi-automated machines), and one or more items 30 (collectively referred to as "objects" herein). In the workspace 100, the human 10 and the robot 20 may work collaboratively, or may operate independently, or alternate between the two working arrangements to process the one or more items 30. The workspace 100 is monitored by one or more sensors 102 arranged to collectively cover and monitor the workspace 100, particularly those regions of the workspace 100 where the human 10 and robot 20 interact collaboratively with the item 30. The sensors 102 may be any suitable sensors capable of monitoring the workspace 100. In one embodiment, the sensors 102 are capable of obtaining three-dimensional images or other suitable three-dimensional data for use in determining a spatial relationship between the human 10 and robot 20 in three-dimensional space. For example, in some embodiments, the sensors 102 may include three-dimensional time-of-flight cameras, laser scanners, stereo vision cameras, three-dimensional LIDAR sensors, other radar-based sensors, or other suitable sensors.

The workspace 100 may include any number of sensors 102 needed to ensure the sensors 102 collectively monitor the target regions of the workspace 100 as desired. Preferably, the sensors 102 are arranged to minimize or avoid occlusions to the extent possible to obtain as complete of a view as possible of the workspace shared between the human 10 and robot 20 (and the item 30), and to effectively monitor the workspace 100 with as few sensors 102 as possible to help minimize computational requirements. After arranging the sensors 102 around the workspace 100, their position relative to one another may be registered using any suitable method. For example, in one embodiment, images as between the sensors 102 may be compared to ensure proper calibration and coverage of the workspace 100. The calibration step may be used to identify occlusions or static objects in the sensor field-of-view to ensure those objects are accounted for and not considered in the analysis steps. With the sensors 102 properly calibrated relative to the environment, the sensor data can be reliably used to monitor positions and movements of the human 10, the robot 20, and the item 30 in the workspace 100.

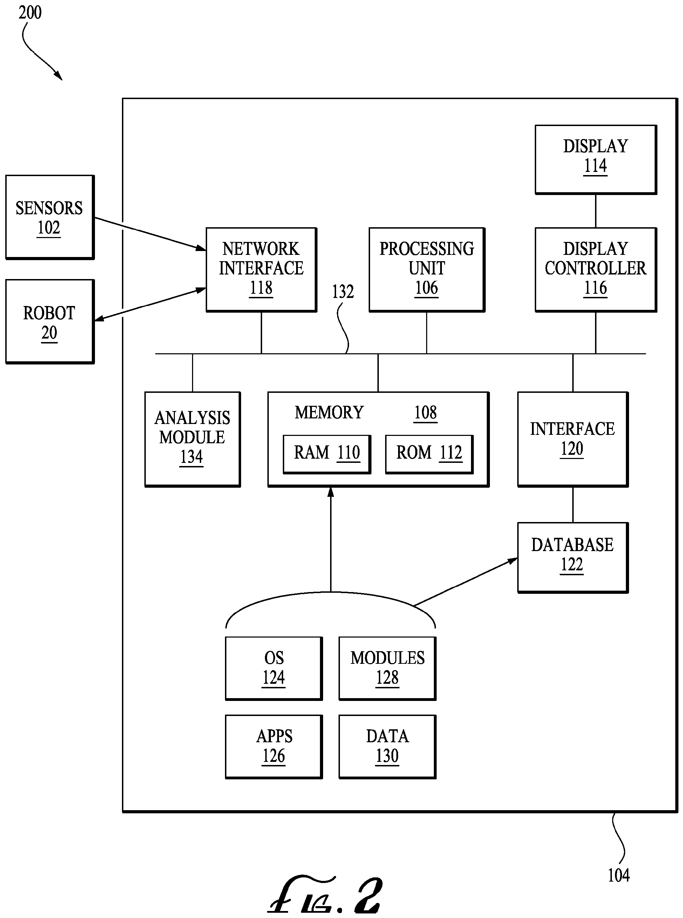

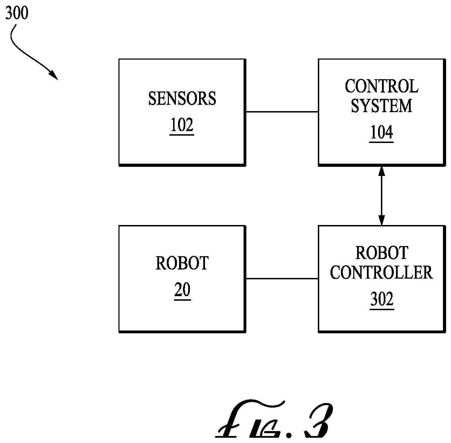

FIG. 2 is a block diagram illustrating components for an example control system 104 that may be part of a workspace monitoring system 300 (see FIG. 3) in accordance with one embodiment, where the control system 104 is generally equipped to evaluate sensor data from the sensors 102 and determine motion characteristics (e.g., speed or velocity) for some or all of the objects (e.g., human 10, robot 20, item 30) in the workspace 100 (or other suitable scene). In some embodiments, the control system 104 may be further equipped to determine suitable actions based on the motion data for the objects. For example, in some embodiments, the control system 104 may determine and execute control actions (e.g., slow down or stop) for the robot 20 and/or manage alarms to alert the human 10 of potential dangers based on motion characteristics of one or more objects in the workspace 100. Additional details of the control system 104 are described below.

With reference to FIG. 2, data from each sensor 102 monitoring the workspace 100 is received by the control system 104. The regions monitored and covered by each sensor 102 may be represented in any suitable form of volumetric representation. The control system 104 includes a central processing unit (CPU) 106 which may be any of various suitable commercially available processors or other logic machine capable of executing instructions. In other embodiments, suitable dual microprocessors or other multi-processor architectures may also be employed as the processing unit 106. The control system 104 further includes memory 108 which may be implemented using one or more standard memory devices. The memory devices may include, for instance, RAM 110, ROM 112, and EEPROM devices, and may also include magnetic or optical storage devices, such as hard disk drives, CD-ROM drives, and DVD-ROM drives. The memory 108 contains instructions stored therein for controlling operation of the CPU 106 and its interactions with other components of the control system 104. In some embodiments, the control system 104 may include a display 114 driven by a display controller 116.

The control system 104 further includes a network interface 118 to communicate with and receive data from the sensors 102. The network interface 118 may facilitate wired or wireless communication with other devices over a short distance (e.g., Bluetooth^{™}) or nearly unlimited distances (e.g., the Internet). In the case of a wired connection, a data bus may be provided using any protocol, such as IEEE 802.3 (Ethernet), advanced technology attachment (ATA), personal computer memory card international association (PCMCIA), and USB. A wireless connection may use low or high-powered electromagnetic waves to transmit data using any wireless protocol, such as Bluetooth^{™}, IEEE 802.11b (or other WiFi standards), infrared data association (IrDa), and radio frequency identification (RFID). In addition, a modem module (not shown) or Ethernet module (not shown) may be incorporated to facilitate a WAN networking environment. The control system 104 may also include an interface 120 coupled to a database or internal hard drive 122. interface 120 may also be coupled to removable memory, such as flash memory, a magnetic floppy disk drive, an optical disk drive, or another drive. Further, the interface 120 may be configured for external drive implementations, such as over a USB, IEEE 1194, or PCMCIA connection.

In one embodiment, any number of program modules may be stored in one or more drives 122 and RAM 110, including an operating system 124, one or more application programs 126, or other program modules 128 (such as instructions to implement the methods described herein), and data 130. All or portions of the program modules may also be cached in RAM 110. Any suitable operating system 124 may be employed, such as Windows Embedded CE, Windows Embedded Handheld, Windows Desktop, Android, Linux, iOS, MacOS, or other commercially available or proprietary operating systems.

The above-described components, including the processing unit 106, memory 108, display controller 116, network interface 118, and interface 120 may be interconnected via a bus 132. While a bus-based architecture is illustrated in FIG. 2, other types of architectures are also suitable (e.g., one or more components may be directly coupled to one another). While the illustrated embodiment depicts one possible configuration for a control system 104, it should be recognized that a wide variety of hardware and software configurations may be provided. For example, other embodiments may have fewer than all of these components or may contain additional components.

As noted previously, data from the sensors 102 monitoring the workspace 100 is received by the control system 104 via any suitable communications means, such as the network interface 118, and stored in memory 108 for processing by an analysis module 134. The analysis module 134 may employ conventional computer-vision techniques, such as deep-learning algorithms or deterministic algorithms, to analyze the data from the sensors 102 and distinguish between humans, automated machines (such as robots), workpieces, and other objects. As noted above, in some embodiments, the analysis module 134 of the control system 104 may be programmed to analyze the data from the sensors 102 and determine motion data (e.g., velocity) between some or all of the objects (e.g., the human 10, robot 20, and/or item 30) in the workspace 100. In some embodiments, the control system 104 may be further operable to transmit signals back to the robot 20 (and/or other suitable objects in the workspace 100) to take a corrective action based on the motion data, such as to adjust a movement speed and/or trajectory of the robot 20 to avoid potential injury to the human 10. Additional details relating to the processing steps undertaken by the analysis module 134 of the control system 104 to determine motion data of the objects and/or to determine the appropriate instructions to send to the robot 20 (and/or other objects in the workspace 100) are detailed below with particular reference to FIGS. 4-9.

**To** establish a general frame of reference, the following briefly describes an example configuration of a workspace monitoring system 300 and its functionality to help ensure safety distances between the human 10 and robot 20 are maintained within the workspace 100. FIG. 3 is a schematic diagram illustrating general details of a workspace monitoring system 300 in accordance with one embodiment. As described previously, sensors 102 monitor the workspace 100, where the sensors 102 continuously capture three-dimensional data relating to some or all objects in the workspace 100. The sensors 102 provide real-time information that is analyzed by the control system 104 (such as by the analysis module 134 and/or other components) to determine motion data for the objects in the workspace 100.

In one example embodiment, the control system 104 first receives data from the sensors 102 and uses this information to construct a virtual representation of the objects in the scene. From the virtual representation of the objects in the scene, the control system 104 determines motion data for all objects (or for specific target objects as desired) in the workspace 100 as further described in detail below. Based on the motion data, if the control system 104 determines that a collision is likely or imminent, the control system 104 may communicate with a robot controller 302 (which may control robot actions such as range of motion, movement pattern, and velocity) to take a corrective action, such as by deactivating the robot 20, slowing down the robot 20, or altering the movement pattern of the robot 20 to avoid the collision.

In other example embodiments, the control system 104 may communicate with any suitable electronic device or system depending on the application and/or field of use. For example, in autonomous guided vehicles and unmanned aerial vehicles, the control system 104 may communicate with any suitable system (e.g., steering systems, brake systems, etc.) to execute instructions to take a suitable corrective action based on the calculated motion data for target objects in a scene, where the corrective action may be taken to avoid collisions and/or steer away from danger. Additional details for systems and methods for determining motion data in a three-dimensional scene are described below with reference to FIGS. 4-9.

With collective reference to FIGS. 4-9, the following discussion provides details of example systems and methods for efficiently estimating the motion of one or more objects in a three-dimensional environment (e.g., the workspace 100 of FIG. 1) while minimizing computational load and maintaining sufficient accuracy. As noted above, in some embodiments, the estimated motion data calculated from the three-dimensional environment may be used to determine suitable actions for other objects in the three-dimensional environment. For example, the motion data may be used for determining instructions for a robot 20 in a workspace 100 to promote efficiency and ensure overall safety. In other embodiments, the estimated motion data may be used in conjunction with other vision-guided systems as previously described.

FIG. 4 is a flow chart illustrating a method 400 for determining motion data for one or more three-dimensional objects (e.g., a human 10, robot 20, item 30 of FIG. 1) in a three-dimensional environment (e.g., a workspace 100). With reference to FIG. 4, at step 402, the sensors (such as sensors 102 of FIG. 1) obtain position information for the one or more objects in the workspace 100. For example, the sensors 102 may capture three-dimensional data relating to the human 10, the robot 20, and the item 30 in the workspace 100. As noted previously, the sensors 102 may include three-dimensional cameras or other suitable technology capable of obtaining three-dimensional data for the objects in the workspace 100.

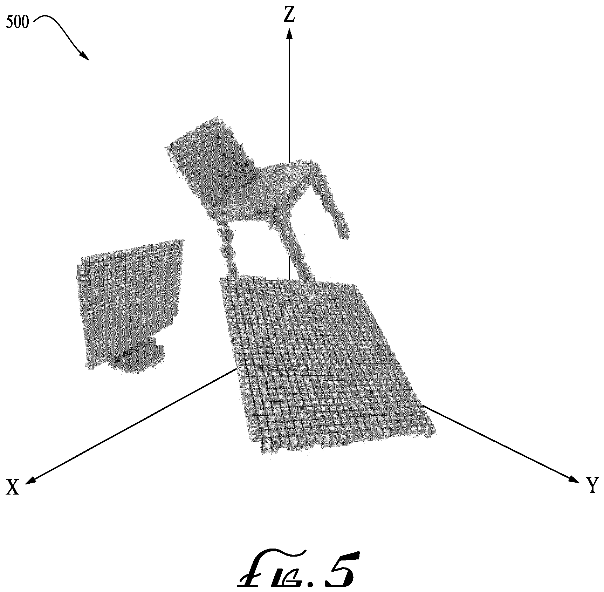

At step 404, the data (e.g., three-dimensional raw data) including the position information obtained by the sensors for the objects in the scene is transmitted to and received by a suitable processing system, such as the control system 104. In such examples, the control system 104 (such as via the analysis module 134 and/or other components in communication therewith) generates a voxelized map reconstructing the three-dimensional scene captured by the sensors and representing the captured objects (e.g., human 10, robot 20, item 30, etc.) as voxels. The voxelized map may be generated in any suitable fashion, such as by using a triangle mesh analysis or by relying on three-dimensional point cloud data incrementally collected by the sensors or other suitable three-dimensional technology. Creating the voxelized map from the sensor data is essentially a matter of setting all voxels considered to be inside the one or more target objects (e.g., a part of the object), where each voxel represents a single data point on a regularly spaced, three-dimensional grid without any representation of any spacing between voxels. Binary voxel representations, as used in computer graphics, can be considered a discrete approximation of objects through a solid voxelization process that sets all voxels as interior parts of an object. For reference, FIG. 5 represents an example of a voxelized map 500 of a three-dimensional scene (including a chair, a monitor, and a portion of a conveyor belt) generated by the sensor data in accordance with one example embodiment.

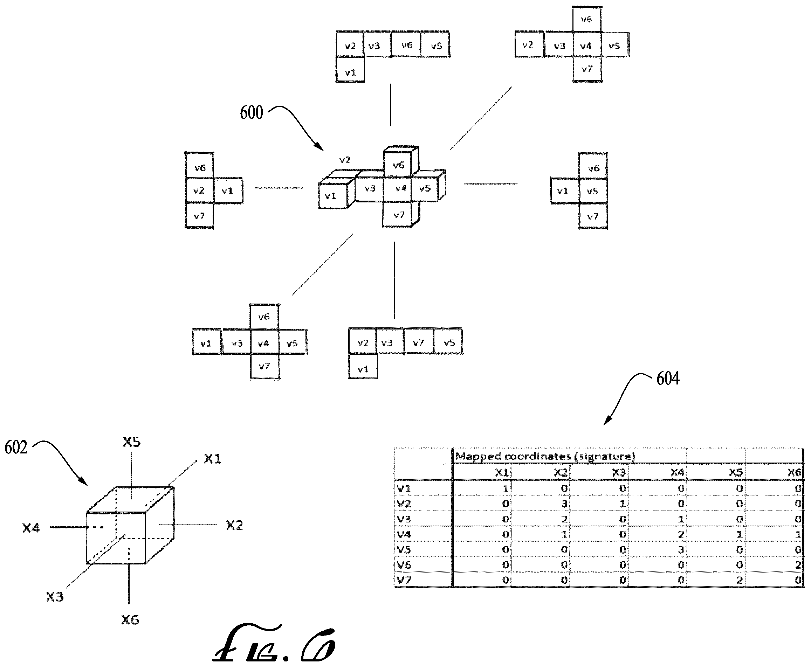

At step 406, the control system 104 (such as via the analysis module 134 and/or other components in communication therewith) assigns a unique signature identifier to each voxel for all voxelized objects of interest in the three-dimensional voxelized map generated at step 404. For example, FIG. 6 illustrates an example voxelized object 600 in accordance with one embodiment. With reference to FIG. 6, the voxelized object 600 comprises seven labeled voxels in the illustrated example, represented as V1, V2, V3, V4, V5, V6, and V7. With reference to FIG. 6, it is possible to univocally number the six voxel faces of each voxel of the voxelized object 600, and with that, to easily determine the number of adjacent voxels along a direction normal to each of the faces. For example, a voxel 602 in FIG. 6 illustrates six outward faces, represented as X1, X2, X3, X4, X5, X6.

Using the labeled outward faces of the voxel 602 as a reference, the mapped coordinates for each voxel of the voxelized object 600 may be obtained by counting adjacent voxels for each of V1, V2, V3, V4, V5, V6, and V7. For example, with reference to FIG. 6, for voxelized object 600, voxel V1 has one voxel (e.g., V2) adjacent face X1. Voxel V1 has no other voxels adjacent any other face thereof. Accordingly, the mapped coordinates in the table 604 for V1 are reflected as 1-0-0-0-0-0. Similarly, voxel V2 has three voxels (e.g., V3, V4, and V5) adjacent face X2 and one voxel (e.g., V1) adjacent face X3. Voxel V2 has no other voxels adjacent any other face thereof. Accordingly, the mapped coordinates in the table 604 for V2 are reflected as 0-3-1-0-0-0. As another example, voxel V3 has two voxels (e.g., V4 and V5) adjacent face X2, one voxel (e.g., V2) adjacent face X4, and no other voxels adjacent the remaining faces. Accordingly, the mapped coordinates in the table 604 for V3 are reflected as 0-2-0-1-0-0. This labeling process is repeated for each of the voxels V1, V2, V3, V4, V5, V6, and V7 of the voxelized object 600. In this fashion, the mapped coordinates in the table 604 may be obtained for the voxelized object 600 in which a unique six-dimensional signature (illustrated in tabular form for faces X1, X2, X3, X4, X5, X6) is created and assigned for each voxel of the voxelized object 600. In some embodiments, different voxels may have the same six-dimensional signature that may result from symmetry of the voxelized object 600 or by randomness. In some cases, voxels with the same signatures may be detected and excluded from calculations to streamline the process.

In some embodiments, the process at step 406 may be completed for all voxelized objects in the three-dimensional scene. In other embodiments, the process at step 406 may be completed for a target subset of objects in the scene. For example, in some embodiments where the human 10 (see FIG. 1) is not moving, the above-analysis may focus only on the robot 20 or other objects. As noted previously, in some embodiments, the voxelized object 600 may focus on the center-of-gravity or on a specific segment or portion of the target object rather than on the entire object to reduce the computational load. In still other embodiments, the process may account for the entire object for a more robust calculation.

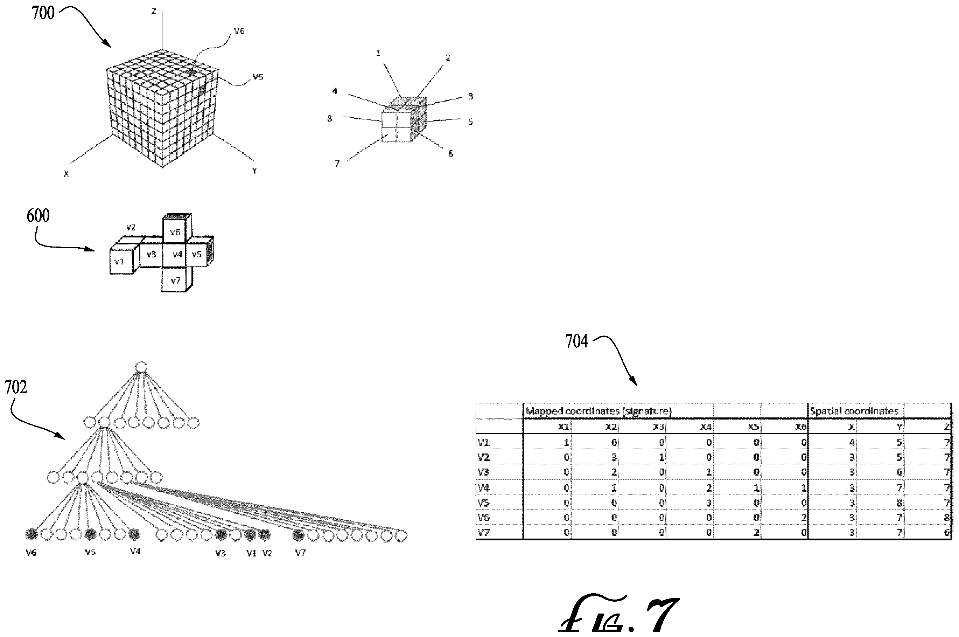

At step 408, once the unique six-dimensional signature has been obtained, the three-dimensional environment (e.g., workspace 100) captured by the sensors, including the voxelized object, is encoded across at least two or more timeframes via the control system 104 (such as via the analysis module 134 and/or other components in communication therewith). In some embodiments, an octree structure 700 may be used to encode the data as a means for balancing efficiency and accuracy. Briefly, an octree is a data structure in which each internal node 702 has exactly eight children. Octrees are most often used to partition a three-dimensional space by recursively subdividing it into eight octants. As an example, in FIG. 7, an octree 700 with N=3 levels subdivision (i.e., 512 spatial decomposition) corresponding to the monitored three-dimensional space is illustrated. In the octree 700, a spatial positioning of the voxelized object 600 is illustrated, with voxels V5 and V6 visible on the outermost faces of the octree 700 (while remaining voxels of the voxelized object 600 are disposed on internally-facing portions of the octree). Table 704 illustrates the mapped coordinates (e.g., signature) of the voxelized object 600 (as described previously) along with corresponding spatial coordinates of the voxelized object 600 within the octree 700. One advantage of using an octree data structure is that it allows for fast access to data points (e.g., the coordinates in table 704) through lookup tables and other programming patterns.

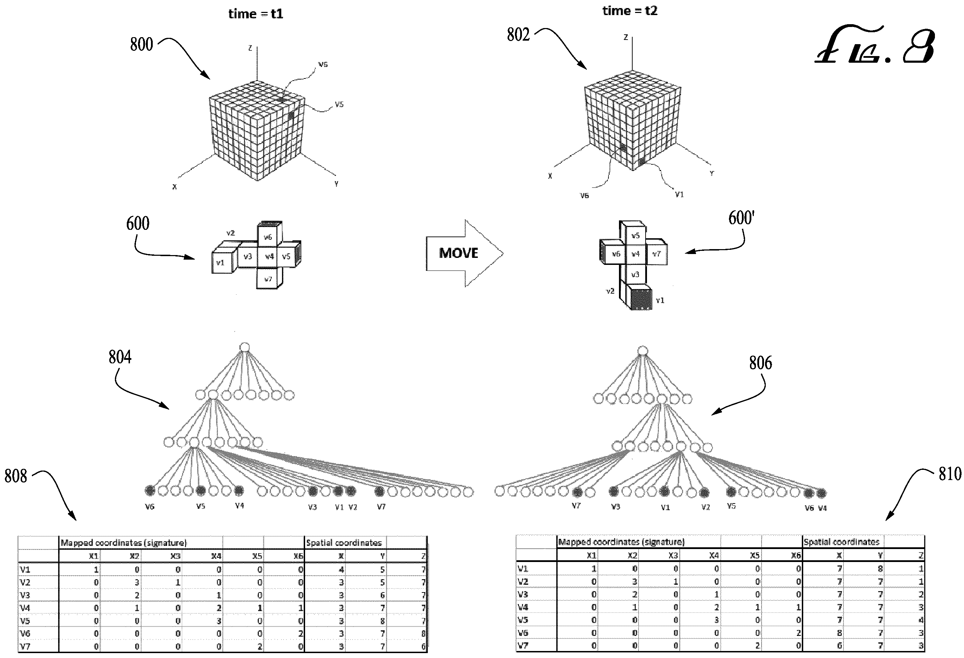

As noted above, step 408 includes the creation of an octree at different timepoints to capture motion of the voxelized objects within the monitored three-dimensional scene across the tracked timepoints. Accordingly, in one example, a pair of octrees may be generated at a time, *t1,* and a time, *t₂,* as further described below with reference to step 410 and FIG. 8.

At step 410, the control system 104 (such as via the analysis module 134 and/or other components in communication therewith) compares the octrees to track the voxelized object across timeframes and determine motion data associated therewith. For example, with reference to FIG. 8, the analysis module 134 may generate a first octree 800 at time *t₁* and a second octree 802 at time *t₂,* where both octrees 800, 802 represent the same three-dimensional environment at two distinct timeframes. With reference to FIG. 8, for each leaf 804 of the first octree 800, the control system 104 identifies a corresponding leaf 806 in the second octree 802 based on the unique six-dimensional signature for the voxelized object 600. As illustrated in FIG. 8, the spatial orientation of the six-dimensional signature for the voxelized object 600 may change across the time periods *t₁* and *t₂* (see for example voxelized object 600' at time *t₂*.) However, the control system 104 is programmed to consider different permutations of the same signature as an equal signature, thereby simplifying the overall computational load. Compare for example the mapped coordinates in the tables 808, 810 for the voxelized objects 600, 600'. With reference FIG. 8, the voxelized object 600 at time *t₁* and the voxelized object 600' at time *t₂* have voxels arranged in different spatial coordinates relative to one another, but both have the same six-dimensional signature as illustrated in the mapped coordinate tables 808, 810, respectively.

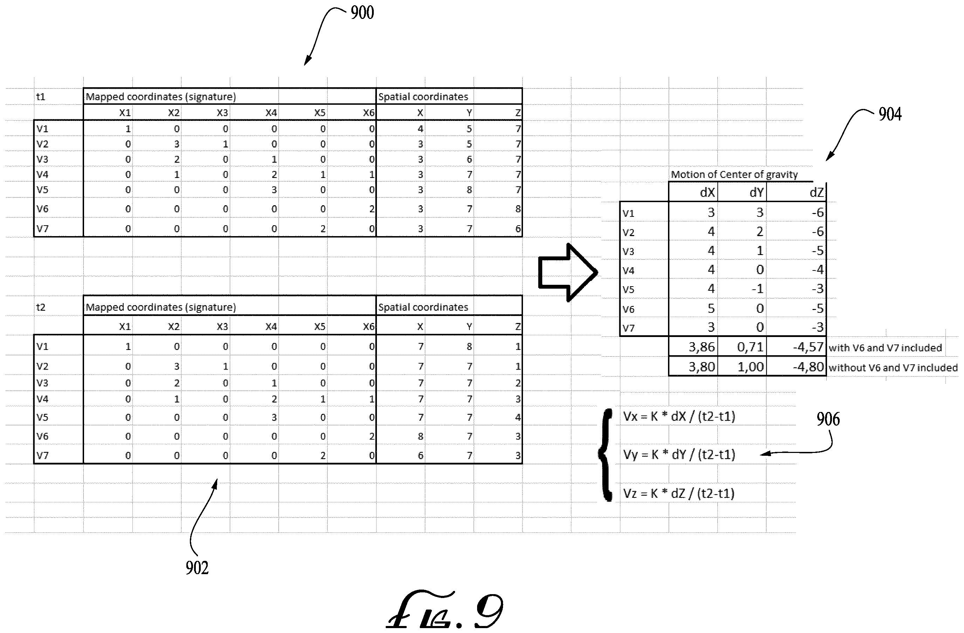

At step 412, the control system 104 (such as via the analysis module 134 and/or other components in communication therewith) estimates the change in three-dimensional voxel motion for each voxel (V1, V2, V3, V4, V5, V6, V7) along the x-, y-, and z- axis. In one embodiment, the control system 104 computes the difference of the voxel positions along the three coordinates across the change in time from *t₁* to *t₂.* For example, FIG. 9 illustrates a coordinate table 900 including the mapped coordinates (e.g., six-dimensional signature) and the corresponding spatial coordinates (in the x-, y-, and z- axis) from the first octree (e.g., octree 800) for the first voxelized object 600 at time *t1,* and a coordinate table 902 including the mapped coordinates (e.g., six-dimensional signature) and the corresponding spatial coordinates (in the x-, y-, and z-axis) from the second octree (e.g., octree 802) for the second voxelized object 600' at time *t₂*. Using the spatial coordinates, the control system 104 computes the shift or difference along the x-, y-, and z- axis for each voxel. For example, V1 was represented at coordinates 4-5-7 (x-, y-, and z- axis) at time *t₁* and at coordinates 7-8-1 (x-, y-, and z- axis) at time *t₁.* Determining the difference between the two sets of coordinates results in a coordinate change of 3, 3, -6 (x-, y-, and z- axis) as represented in table 904 of FIG. 9. A similar calculation is performed for all remaining voxels V2, V3, V4, V5, V6, V7 as illustrated in table 904.

At step 414, the control system 104 uses the resulting shift differences as determined from step 412 to estimate velocity for the target object in the three-dimensional scene. For example, with reference to FIG. 9, the control system 104 may average the shift values across all voxels for x-, y-, and z- axis to obtain an average shift for each of the x-, y-, and z- coordinates. In the example of FIG. 9, the average values are calculated as 3.86, 0.71, and -4.57 for the x-, y-, and z- axis. To determine a velocity from this data, the control system 104 may use equations 906, where K is a constant of proportionality corresponding to the linear dimension of the voxels in the octrees, dX, dY, and dZ are the average shift values for the respective axes as determined in step 412, and *ti and t₂* are the time periods represented by the respective octrees as discussed above.

In some embodiments, as changes occur in the monitored three-dimensional scene over time (e.g., objects move into or out of the scene), new voxels may be produced or eliminated while the described process above continues generating and comparing pairs of voxelized three-dimensional scenes to continue tracking object motion.

In some embodiments, some voxels may be excluded from the calculation to exclude permutations from the same signature. For example, with reference to FIG. 8, voxels V6 and V7 at time *t₁* may be excluded. In some cases, excluding these voxels may result in a negligible error in the shift calculation when the number of total voxels being evaluated (typically in the tens of thousands) is very high. For reference, FIG. 9 illustrates the shift calculation with and without voxels V6 and V7.

**As** noted previously, the above-referenced calculations for method 400 may focus on the center-of-gravity of the solid object body being tracked to streamline the calculation and minimize computational load. However, if desired, it would be possible to focus on the local motion of specific segments of the object (e.g., focusing on a moving joint of a robot), or to have a more robust calculation that considers the entirely, or larger portions of any target objects in the three-dimensional scene.

In other embodiments, rotational movements along an axis may be quantified by creating a histogram of the velocity values along the various directions in the x-, y-, and z- axis for each voxel. The voxels closest to the axis would have lower velocity values, while the voxels moving faster and with similar velocities relative to one another may be use in estimating rotational speed of the object.

As described, the method 400 and the related systems illustrated in the figures provide an efficient, streamlined process for tracking and estimating the motion of target objects in a workspace. The method 400 is designed to accurately estimate object motion while minimizing computational load. As described previously, in some embodiments, the method 400 may be used in a workspace (e.g., workspace 100) to manage actions of a machine (e.g., robot 20) and/or generate alarms to ensure the safety of a human (e.g., human 10) based on object motion within the scene exceeding a threshold value for any of the objects. For example, in some embodiments, the control system 104 may determine applicable instructions (e.g., altering a movement pattern or speed of a joint) for transmission to the robot 20 based on the estimated velocities determined from step 414.

In other embodiments as noted previously, the method 400 may be used in conjunction with other vision-guided systems to track objects and estimate motion, where the motion data is used by the business logic of the application as needed. In such embodiments, the control system 104 may also determine and transmit applicable instructions for any one or more object in the three-dimensional scene as desired.

It should be understood that in some embodiments, certain of the steps described in method 400 may be combined, altered, varied, and/or omitted without departing from the principles of the disclosed subject matter. It is intended that subject matter disclosed in portion herein can be combined with the subject matter of one or more of other portions herein as long as such combinations are not mutually exclusive or inoperable. In addition, many variations, enhancements and modifications of the systems and methods described herein are possible.

The terms and descriptions used above are set forth by way of illustration only and are not meant as limitations. Those skilled in the art will recognize that many variations can be made to the details of the above-described embodiments without departing from the underlying principles of the invention.

The following items are also disclosed herein:
1. A method for monitoring a three-dimensional environment, the method comprising:
   receiving, via a control system, data including position information associated with one or more objects in a three-dimensional environment;
   generating, via the control system, a voxelized map based on the data, wherein the voxelized map represents the one or more objects in the three-dimensional environment as a voxelized object comprising a plurality of voxels;
   determining, via the control system, a signature identifier associated with each voxelized object in the voxelized map;
   encoding, via the control system, the data of the three-dimensional environment into a first data structure at a first time, *t₁,* wherein the first data structure includes each voxelized object;
   encoding, via the control system, the data of the three-dimensional environment into a second data structure at a second time, *t₂,* wherein the second data structure includes each voxelized object;
   determining, via the control system, a coordinate position of each voxelized object in the first data structure and the second data structure based on the signature identifier associated with each voxelized object;
   determining, via the control system, a change in coordinate position associated with each voxelized object based on a comparison of the first data structure and the second data structure; and
   determining, via the control system, a motion measurement of each voxelized object based on the change in coordinate position.
2. The method of item 1, further comprising obtaining, via one or more sensors arranged to monitor the three-dimensional environment, the data associated with the one or more objects.
3. The method of item 2, wherein the one or more sensors are three-dimensional sensors, and wherein the voxelized map is generated via three-dimensional point cloud data obtained by the one or more sensors.
4. The method of any of the previous items, wherein the signature identifier is a unique signature identifier assigned to each voxel of the plurality of voxels comprising each voxelized object in the voxelized map.
5. The method of item 4, wherein determining the unique signature identifier for each voxel of the plurality of voxels further comprises determining, via the control system, a number of voxels adjacent a direction normal to each face of each voxel.
6. The method of item 5, wherein the unique signature identifier comprises a six-dimensional configuration.
7. The method of any of the previous items, further comprising determining, via the control system, a target portion for each voxelized object, and wherein the signature identifier is based on the target portion for each voxelized object.
8. The method of item 7, wherein the target portion includes a center of gravity or a segment of the voxelized object.
9. The method of any of the previous items, further comprising:
   analyzing, via the control system, the motion measurement associated with each voxelized object; and
   transmitting, via the control system, instructions to at least one of the one or more objects in the three-dimensional environment, wherein the instructions alter an action associated with the at least one of the one or more objects.
10. The method of any of the previous items, further comprising:
   analyzing, via the control system, the motion measurement associated with each voxelized object; and
   generating, via the control system, an alarm signal in response to the motion measurement for any of the voxelized objects exceeding a threshold value.
11. The method of any of the previous items, wherein the step of determining a change in coordinate position associated with each voxelized object, further comprises comparing a coordinate position at time t₁ of each voxel of the voxelized object in the first data structure with a coordinate position at time t₂ of the corresponding voxel of the voxelized object in the second data structure.
12. The method of item 11, wherein the step of determining a motion measurement of each voxelized object further comprises:
   averaging the change in coordinate position for each voxel along an x-axis, y-axis, and z-axis; and
   calculating the motion measurement along the x-axis, y-axis, and z-axis based on the average change in coordinate position.
13. The method of any of the previous items, wherein the motion measurement includes one or both of a speed and a velocity associated with the voxelized object.
14. The method of any of the previous items, wherein the first data structure and the second data structure are each octrees.
15. A system for monitoring a three-dimensional environment, the system comprising:
   one or more sensors arranged to monitor the three-dimensional environment, the one or more sensors operable to obtain data including position information associated with one or more objects in the three-dimensional environment; and
   a control system operable to receive the data from the one or more sensors, the control system further operable to:
      generate a voxelized map based on the data, wherein the voxelized map represents the one or more objects in the three-dimensional environment as a voxelized object comprising a plurality of voxels;
      determine a signature identifier associated with each voxelized object in the voxelized map;
      encode the data of the three-dimensional environment into a first data structure at a first time, *t₁,* wherein the first data structure includes each voxelized object, and encode the data of the three-dimensional environment into a second data structure at a second time, *t₂,* wherein the second data structure includes each voxelized object;
      determine a coordinate position of each voxelized object in the first data structure and the second data structure based on the signature identifier associated with each voxelized object;
      determine a change in coordinate position associated with each voxelized object based on a comparison of the first data structure and the second data structure; and
      determine a motion measurement of each voxelized object based on the change in coordinate position.
16. The system of item 15, wherein the signature identifier is a unique signature identifier assigned to each voxel of the plurality of voxels comprising each voxelized object in the voxelized map.
17. The system of any of items 15-16, wherein the control system is further operable to compare a coordinate position at time t₁ of each voxel of the voxelized object in the first data structure with a coordinate position at time t₂ of the corresponding voxel of the voxelized object in the second data structure to determine a change in coordinate position.
18. The system of any of items 15-17, wherein the control system is in operable communication with at least one of the one or more objects in the three-dimensional environment, and wherein the control system is further operable to transmit instructions to alter an action associated with the at least one of the one or more objects based on the determined motion measurement.
19. The system of any of items 15-18, wherein the control system is further operable to generate an alarm signal based on the determined motion measurement for any one of the voxelized objects.
20. The system of any of items 15-19, wherein the one or more sensors include laser scanners, three-dimensional time-of-flight cameras, stereo vision cameras, three-dimensional LIDAR sensor or other radar-based sensors.

## Claims

1. A method for monitoring a three-dimensional environment, the method comprising:
receiving, via a control system, data including position information associated with one or more objects in a three-dimensional environment;
generating, via the control system, a voxelized map based on the data, wherein the voxelized map represents the one or more objects in the three-dimensional environment as a voxelized object comprising a plurality of voxels;
determining, via the control system, a signature identifier associated with each voxelized object in the voxelized map;
encoding, via the control system, the data of the three-dimensional environment into a first data structure at a first time, *t₁,* wherein the first data structure includes each voxelized object;
encoding, via the control system, the data of the three-dimensional environment into a second data structure at a second time, *t₂,* wherein the second data structure includes each voxelized object;
determining, via the control system, a coordinate position of each voxelized object in the first data structure and the second data structure based on the signature identifier associated with each voxelized object;
determining, via the control system, a change in coordinate position associated with each voxelized object based on a comparison of the first data structure and the second data structure; and
determining, via the control system, a motion measurement of each voxelized object based on the change in coordinate position.

2. The method of claim 1, further comprising obtaining, via one or more sensors arranged to monitor the three-dimensional environment, the data associated with the one or more objects, preferably wherein the one or more sensors are three-dimensional sensors, and preferably wherein the voxelized map is generated via three-dimensional point cloud data obtained by the one or more sensors.

3. The method of any of the previous claims, wherein the signature identifier is a unique signature identifier assigned to each voxel of the plurality of voxels comprising each voxelized object in the voxelized map.

4. The method of claim 3, wherein determining the unique signature identifier for each voxel of the plurality of voxels further comprises determining, via the control system, a number of voxels adjacent a direction normal to each face of each voxel, preferably wherein the unique signature identifier comprises a six-dimensional configuration.

5. The method of any of the previous claims, further comprising determining, via the control system, a target portion for each voxelized object, and wherein the signature identifier is based on the target portion for each voxelized object, preferably wherein the target portion includes a center of gravity or a segment of the voxelized object.

6. The method of any of the previous claims, further comprising:
analyzing, via the control system, the motion measurement associated with each voxelized object; and
transmitting, via the control system, instructions to at least one of the one or more objects in the three-dimensional environment, wherein the instructions alter an action associated with the at least one of the one or more objects and/or generating, via the control system, an alarm signal in response to the motion measurement for any of the voxelized objects exceeding a threshold value.

7. The method of any of the previous claims, wherein the step of determining a change in coordinate position associated with each voxelized object, further comprises comparing a coordinate position at time t₁ of each voxel of the voxelized object in the first data structure with a coordinate position at time t₂ of the corresponding voxel of the voxelized object in the second data structure.

8. The method of claim 7, wherein the step of determining a motion measurement of each voxelized object further comprises:
averaging the change in coordinate position for each voxel along an x-axis, y-axis, and z-axis; and
calculating the motion measurement along the x-axis, y-axis, and z-axis based on the average change in coordinate position.

9. The method of any of the previous claims, wherein the motion measurement includes one or both of a speed and a velocity associated with the voxelized object.

10. The method of any of the previous claims, wherein the first data structure and the second data structure are each octrees.

11. A system for monitoring a three-dimensional environment, the system comprising:
one or more sensors arranged to monitor the three-dimensional environment, the one or more sensors operable to obtain data including position information associated with one or more objects in the three-dimensional environment; and
a control system operable to receive the data from the one or more sensors, the control system further operable to:
generate a voxelized map based on the data, wherein the voxelized map represents the one or more objects in the three-dimensional environment as a voxelized object comprising a plurality of voxels;
determine a signature identifier associated with each voxelized object in the voxelized map;
encode the data of the three-dimensional environment into a first data structure at a first time, *t₁,* wherein the first data structure includes each voxelized object, and encode the data of the three-dimensional environment into a second data structure at a second time, *t₂,* wherein the second data structure includes each voxelized object;
determine a coordinate position of each voxelized object in the first data structure and the second data structure based on the signature identifier associated with each voxelized object;
determine a change in coordinate position associated with each voxelized object based on a comparison of the first data structure and the second data structure; and
determine a motion measurement of each voxelized object based on the change in coordinate position.

12. The system of claim 11, wherein the signature identifier is a unique signature identifier assigned to each voxel of the plurality of voxels comprising each voxelized object in the voxelized map.

13. The system of any of claims 11-12, wherein the control system is further operable to compare a coordinate position at time t₁ of each voxel of the voxelized object in the first data structure with a coordinate position at time t₂ of the corresponding voxel of the voxelized object in the second data structure to determine a change in coordinate position.

14. The system of any of claims 11-13, wherein the control system is in operable communication with at least one of the one or more objects in the three-dimensional environment, and wherein the control system is further operable to transmit instructions to alter an action associated with the at least one of the one or more objects based on the determined motion measurement.

15. The system of any of claims 11-14, wherein the control system is further operable to generate an alarm signal based on the determined motion measurement for any one of the voxelized objects.
